# EUROPÄISCHE PATENTSCHRIFT

(11) **EP 1 151 650 B1**
(45) Veröffentlichungstag und Bekanntmachung des Hinweises auf die Patenterteilung: **03.10.2007**
(21) Anmeldenummer: 01106811.1
(22) Anmeldetag: 17.03.2001
(51) Int. Cl.: A01D 33/00, A01B 51/02, A01D 41/02, B62D 53/02

(54) **Selbstfahrende Hackfruchterntemaschine**
Self-propelled root crop harvester
Récolteuse de tubercules autopropulsée

(30) Priorität: 04.05.2000 DE 10021631; 16.05.2000 DE 10024031
(43) Veröffentlichungstag der Anmeldung: 07.11.2001
(73) Patentinhaber: Holmer Maschinenbau GmbH, 84069 Eggmühl (DE)
(72) Erfinder: Holmer, Alfons, 84069 Eggmühl (DE)
(74) Vertreter: Graf, Helmut

(56) Entgegenhaltungen:
- EP-A- 0 803 178
- DE-A- 2 547 669
- DE-A- 3 102 877
- FR-A- 2 451 154
- GB-A- 2 248 539
- US-A- 3 157 239
- US-A- 5 156 219

## Beschreibung

Die Erfindung bezieht sich auf eine Hackfruchterntemaschine gemäß Oberbegriff Patentanspruch 1.

Eine mehrreihig arbeitende, selbstfahrende Hackfruchterntemaschine, insbesondere Kartoffelerntemaschine ist bekannt (EP 803 178). Bekannt ist hierbei insbesondere auch, den Fahrzeugrahmen zweiteilig mit einem Vorderrahmen und einem Hinterrahmen auszubilden und diese gelenkig miteinder zu verbinden. Hierdurch wird einerseits eine Knickverstellung zwischen Vorderrahmen und Hinterrahmen, d.h. ein Schwenken dieser Rahmen relativ zu einander um eine Hochachse (vertikale oder etwa vertikale Achse) für ein spurversetztes Fahren ermöglicht, andererseits aber auch ein Schwenken des Hinterrahmens und der dort vorgesehenen Funktionselemente, insbesondere auch des wenigstens einen Siebbandes und des Bunker über einen vorgegebenen Winkelbereich um eine Längsachse des Hinterrahmens. Durch dieses Schwenken um die Hinterrahmenlängsachse (auch Seitenniveaueinstellung oder Seitenniveauausgleich) können diese Funktionselemente (Siebband, Bunker usw.) unabhängig vom Verlauf des Geländes in einer möglichst aufrechten, d. h. nicht geneigten Stellung bzw. in einer möglichst horizontalen Lage gehalten werden. Der Seitenniveauausgleich ist insbesondere für das wenigstens eine am Hinterrahmen vorgesehene Siebband von Bedeutung, um einen über die gesamte Breite dieses Siebbandes gleichmäßig verteilten Förderstrom für die geernteten Hackfrüchte (z.B. Kartoffeln) zu erreichen, die auf diesem am Hinterrahmen vorgesehenen Siebband bereits weitestgehend von Bodenresten befreit sind und daher bei quer zur Förderrichtung geneigtem Siebband leicht auf eine Seite dieses Siebbandes verrutschen oder verrollen und sich dort konzentrieren, und zwar unter Beeinträchtigung des gewünschten stoßfreien Förderns der geernteten Hackfrüchte (Kartoffeln).

Bekannt ist weiterhin eine selbstfahrende Erntemaschine (FR-A- 2 451 154; DE 30 06 871 A1)) mit einem zweiteiligen Fahrzeugrahmen, der von einem Vorderrahmen und einem Hinterrahmen gebildet ist, wobei jeder Rahmen ein Fahrwerk aufweist. Der Vorderrahmen und der Hinterrahmen sind über eine Gelenkeinrichtung miteinander verbunden, die aus einer ersten zwischen dem Vorderrahmen und dem Hinterrahmen vorgesehenen Gelenkanordnung und aus einem über dieser Gelenkanordnung vorgesehenen und am Forderrahmen sowie am Hinterrahmen angelenkten Gelenk besteht. Die erste untere Gelenkanordnung ist von zwei Gelenken gebildet, und zwar von einem Gelenk, welches ein Schwenken des Hinterrahmens relativ zum Vorderrahmen ermöglicht, also der Knickverstellung des Fahrzeugrahmens dient. Ein zweites Gelenk ermöglicht eine Stellung des Hinterrahmens relativ zum Vorderrahmen um eine Fahrzeuglängsachse, und zwar für einen Seitenniveauausgleich des Hinterrahmens im geneigten Gelände. Für die Knickverstellung sind zwei Stellglieder vorgesehen, die zwischen dem Vorderrahmen und dem Hinterrahmen wirken.

Nachteilig bei der bekannten Erntemaschine ist unter anderem, dass die erste Gelenkanordnung von mehreren Gelenken gebildet ist, was zumindest einen erhöhten Aufwand bedeutet. Nachteilig ist weiterhin auch, dass durch die beiden Stellglieder, die zwischen dem Vorderrahmen und dem Hinterrahmen wirken und im Bereich der ersten Lenkanordnung vorgesehen sind, zwar eine Knickverstellung möglich ist, eine starre Verbindung zwischen Vorderrahmen und Hinterahmen aber nicht gewährleistet ist.

Bekannt ist weiterhin ein kombiniertes Bodenbearbeitungsgerät zum gleichzeitigen Säen und Düngen (DE 39 31 503 A1). Dieses bekannte Gerät besteht im wesentlichen aus zwei jeweils einachsigen fahrbaren Güllefässern, die über ein Kugelgelenk miteinander verbunden sind sowie an ihren beiden Längsseiten jeweils durch einen hydraulischen Arbeitszylinder, wobei diese Arbeitszylinder in einer gemeinsamen Ebene oberhalb oder unterhalb des Kugelgelenks angeordnet sind. Die bei einer selbstfahrenden Hackfruchterntemaschine notwendige Knickverstellung zwischen einem Vorderrahmen und einem Hinterrahmen für ein spurversetztes Fahren sowie die hiervon unabhängige und ebenfalls notwendige Seitenniveaueinstellung für einen Hangausgleich sind mit der Gelenkausbildung bei diesem bekannten Bodenbearbeitungsgerät auf jeden Fall nicht möglich. Weiterhin führt jede gegenläufige Verstellung der Arbeitszylinder des bekannten Bodenbearbeitungsgerätes zwangsläufig auch dazu, daß sich der Abstand zwischen den beiden Güllefässern im Bereich der Arbeitszylinder ändert, während der Abstand am Kugelgelenk fix ist, mit der Folge eines Einknickens bzw. Anhebens des Bodenbearbeitungsgerätes am Übergang zwischen den beiden Güllefässern.

Aufgabe der Erfindung ist es, eine Hackfruchterntemaschine der eingangs erwähnten Art hinsichtlich ihres Aufbaus zu vereinfachen, insbesondere auch bei erheblich reduziertem Fahrzeugleergewicht.

Zur Lösung dieser Aufgabe ist eine Hackfruchmaschine entsprechend dem Patentanspruch 1 ausgebildet.

Der besondere Vorteil der erfindungsgemäßen Hackfruchtmaschine besteht unter anderem darin, daß die für die Knickbewegung und den Seitenniveauausgleich erforderlichen Schwenk- oder Bewegungsmöglichkeiten in einer einzigen Gelenkeinrichtung konzentriert sind, die das erste, als Kugelgelenk ausgebildete oder wirkende Gelenk sowie den beidendig angelenkten und zwischen dem Vorder- und Hinterrahmen wirkenden Lenker aufweist, wobei vorzugsweise sämtliche Stellglieder unmittelbar im Bereich dieser Gelenke vorgesehen sind, sich also eine konstruktiv einfache, nur einen geringen Platzbedarf erfordernde und ein geringes Gewicht aufweisende Gelenk- und Steuereinrichtung für die Knickbewegung und den Seitenniveauausgleich ergibt.

Bei einer bevorzugten Ausführungsform der Erfindung ist das vordere Fahrwerk von wenigstens zwei Raupen- oder Gummiraupenbanndlaufwerken gebildet. Diese Laufwerke gewahrleisten eine große Auflage- bzw. Standfläche bei reduziertem Bodendruck, so daß es bei der Erfindung insbesondere auch möglich ist, die Erntemaschine so auszubilden, daß der Vorderrahmen imwesentlichen auch die Abstützung für den Hinterrahmen bildet, insbesondere beim Seitenniveauausgleich.

Weiterbildungen der Erfindung sind Gegenstand der Unteranspüche. Die Erfindung wird im folgenden anhand der Figuren an einem Ausführungsbeispiel näher erläutert. Es zeigen:
- Fig. 1: eine mehrreihig arbteitende, selbstfahrende Hackfruchterntemaschine in Seitenansicht ;

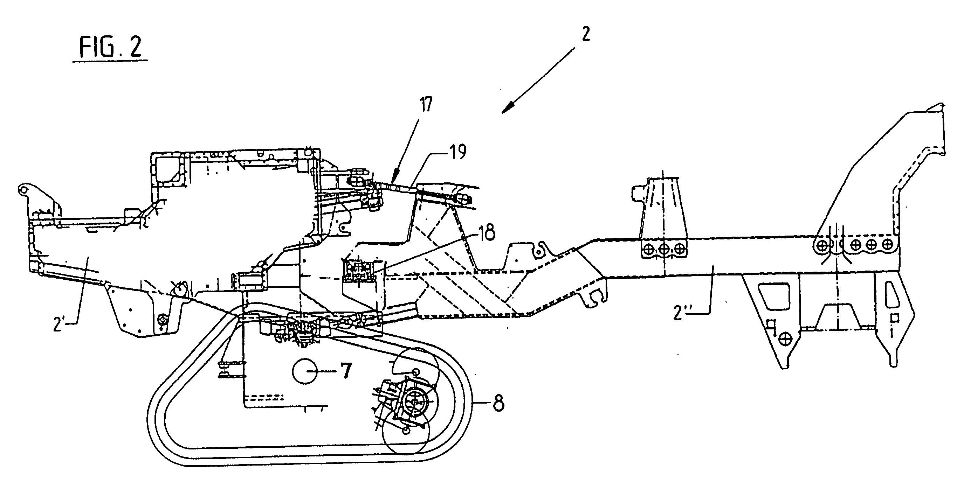

- Fig. 2: in Einzeldarstellung und in Seitenansicht den zweiteiligen Rahmen der Hackfruchterntemaschine der Figur 1;
- Fig. 3: eine vereinfachte Prinzip-Darstellung der Figur 2;
- Fig. 4: den Rahmen der Figur 2 in Teildarstellung und in Draufsicht im Bereich des Übergangs zwischen dem Vorderrahmen und dem Hinterrahmen;
- Fig. 5: eine vereinfachte Prinzip-Darstellung der Figur 4;
- Fig. 6: in vereinfachter Prinzip-Darstellung die Rückansicht des Hinterrahmens mit der dortigen Pendel-Achse;
- Fig. 7: in vereinfachter Teildarstellung eine Draufsicht auf den Rahmen einer selbstfahrenden Hackfruchterntemaschine im Bereich des Übergangs zwischen dem Vorderrahmen und dem Hinterrahmen bei einer weiteren vorteilhaften Ausführungsform;
- Fig. 8: einen Schnitt entsprechend der Linie I - I der Figur 7.

Die in den Figuren allgemein mit 1 bezeichnete Hackfruchterntemaschine dient zum mehrreihigen Ernten bzw. Roden von Hackfrüchten. Sie besteht im wesentlichen aus einem Fahrzeugrahmen 2, der zweiteilig ausgebildet ist und sich aus dem Vorderrahmen 2' und dem Hinterrahmen 2" zusammensetzt. In den Figuren sind mit M die vertikale Mittelachse des Vorderrahmens 2' und mit M' die vertikale Mittelachse des Hinterrahmens 2" angegeben. In diesen Mittelachsen liegen jeweils die Längsachsen des Vorderrahmens 2' bzw. des Hinterrahmens 2".

Auf dem Vorderrahmen 2' befindet sich u. a. das Fahrerhaus 3 und der hinter diesem angeordnete Antriebsmotor 4. Weiterhin ist frontseitig am Vorderrahmen 2' das bei der Vorwärts-Fahrt (Pfeil A) vorauseilende Rode- bzw. Ernteaggregat 6 vorgesehen, mit welchem ein mehrreihiges Ernten der Hackfrüchte, d. h. bei der dargestellten Ausführungsform der Kartoffeln 6 möglich ist. Das Ernte- oder Rodeaggregat 5 besitzt die dem Fachmann von Hackfrucht- bzw. Kartoffelerntemaschinen bekannte Ausbildung.

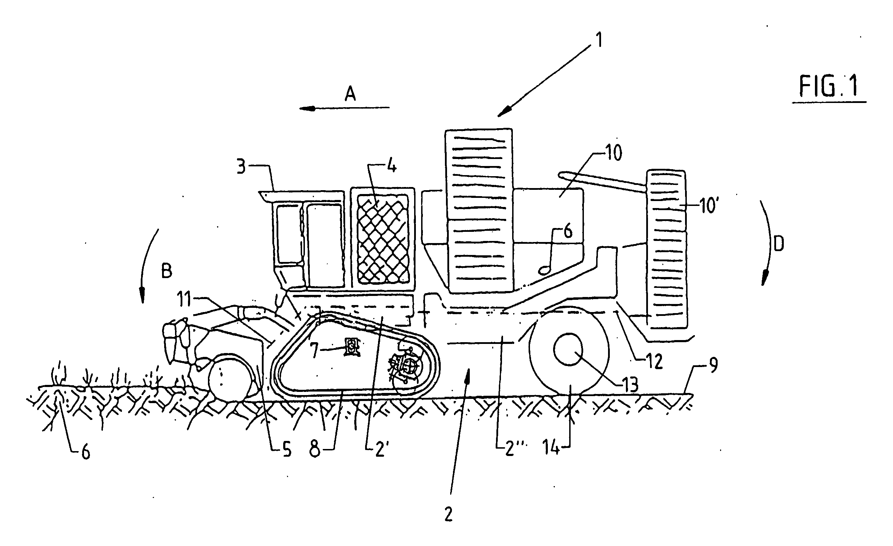

Der Fahrzeugrahmen 2 besitzt bei der dargestellten Ausführungsform zwei Achsen, und zwar die in der Figur 1 allgemein mit 7 bezeichnete Vorderachse, die lenkbar am Vorderrahmen 2' vorgesehen ist und beidendig jeweils ein Raupen- bzw. Gummiraupenbandlaufwerk 8 aufweist. Beide Laufwerke 8, mit denen das Erntefahrzeug 1 mit seinem Vorderrahmen 2 sehr großflächig und sicher auf dem Untergrund 9 (z. B. Ackerboden) aufsteht, sind durch den Motor 4 angetrieben, und zwar beispielsweise durch einen mechanischen Antriebsstrang oder aber hydraulisch unter Verwendung von entsprechenden Hydraulik-Aggregaten und Hydraulik-Motoren. Weiterhin sind beide Gummiraupenbandlaufwerke 8 gefedert und so ausgebildet, daß diese Federung durch ein entsprechendes Stellglied, beispielsweise durch einen Hydraulik-Zylinder, der dann beispielsweise zugleich auch das Federelement für die Federung bildet, blockiert werden kann, um während des Erntevorgangs eine besonders stabile Lage für den Vorderrahmen 2 zu erreichen. Die Verteilung der Gesamt-Masse am Vorderrahmen 2' ist weiterhin bei der dargestellten Ausführungsform so gewählt, daß der Masseschwerpunkt des Vorderrahmens 2' und der an diesem vorgesehenen Funktionselemente, einschließlich des Ernte- oder Rodeaggregats 5 bzw. der von diesem auf den Vorderrahmen 2' übertragenen Kräfte bezogen auf die Fahrtrichtung A etwas vor der Vorderachse 7 liegt, so daß durch diese Massekräfte ein Moment auf den Vorderrahmen 2' um die Vorderachse 7 ausgeübt wird, und zwar im Sinne eines Abkippens eines Vorderrahmens 2' an der Frontseite, wie dies in der Figur 1 mit dem Pfeil B angedeutet ist.

Am Hinterrahmen 2" ist ein Bunker 10 vorgesehen, der zur Aufnahme der gerodeten bzw. geernteten Kartoffeln 6 dient. Der Bunker 10 befindet sich dabei in Längsrichtung des Erntefahrzeugs 1 unmittelbar auf den Antriebsmotor 4 folgend. An der Rückseite des Hinterrahmens 2 sind Aufwärtsförderer 10' vorgesehen, mit denen die gerodeten und über Siebbänder 11 und 12 von dem Rodeaggregat 5 an die Rückseite des Erntefahrzeugs 1 geförderten Kartoffeln 6 in den Bunker 10 eingebracht werden.

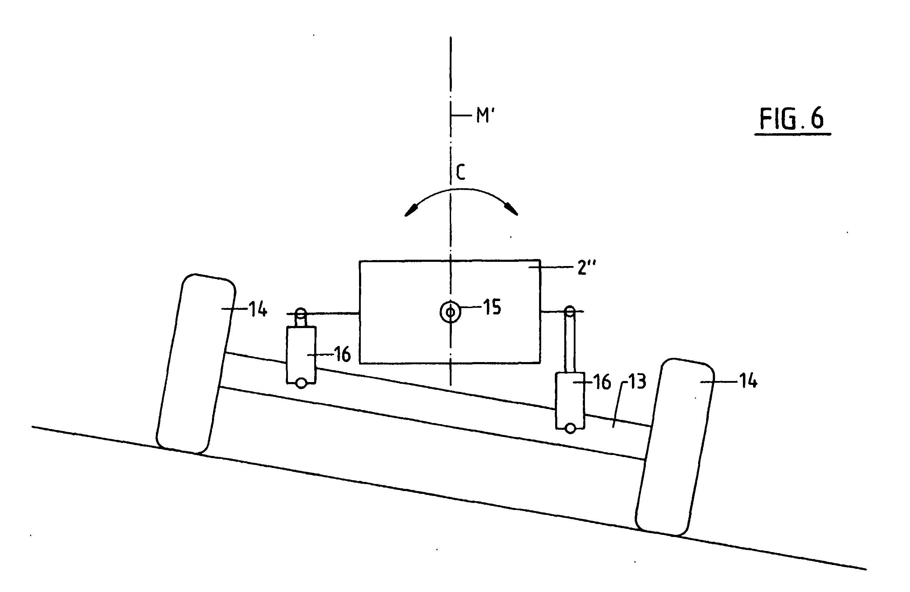

Am Hinterrahmen 2" ist die Hinterachse 13 vorgesehen, die ebenfalls eine angetriebene Achse ist und beidendig die ebenfalls lenkbaren Hinterräder 14 des Erntefahrzeugs 1 aufweist. Die Hinterachse 13 ist als Pendel-Achse ausgebildet, d. h. sie ist in der Mitte um eine Achse 15 parallel zur Längsachse des Hinterrahmens 2" um einen vorgegebenen Winkelbereich, d. h. bei der dargestellten Ausführungsform um einen Winkelbereich von etwa plus/minus acht Grad relativ zum Hinterrahmen 2" schwenkbar, wie dies in der Figur 6 mit dem Doppelpfeil C dargestellt ist. Mit einer Blockiereinrichtung, die bei der dargestellten Ausführungsform von zwei beidseitig vom Hinterrahmen 2" vorgesehenen Hydraulikzylindern 16 gebildet ist, kann die Pendel-Funktion der Hinterachse 13 blockiert werden, um so eine starre Verbindung der Hinter-Achse 13 mit dem Hinterrahmen 2" insbesondere beim Ernten zu ermöglichen. Die Hinterachse 13 ist weiterhin unter Berücksichtigung der Massenverteilung am Hinterrahmen 2" so angeordnet, daß bei leerem Bunker 10 die Gewichtsverteilung am Hinterrahmen 2" ein Moment um die Hinterachse 13 bewirkt, und zwar entsprechend dem Pfeil D im Sinne eines Absenkens des Hecks des Erntefahrzeugs 1.

Wie in der Figur 1 weiterhin schematisch dargestellt ist, ist das Siebband 11 am Vorderrahmen 2' vorgesehen und erstreckt sich dabei unterhalb des Fahrerhauses 3 und des Antriebsmotors 4, aber über die vorderen Laufwerke 8 mit einer Förderbreite, die gleich der Breite des Rodeaggregates 5 ist. Die Siebbänder 12 sind am Hinterrahmen 2" vorgesehen und erstrecken sich bei der dargestellten Ausführungsform mit großer Förderbreite beidseitig von der Mittelebene M' des Hinterrahmens 2" unterhalb des Bunkers 10 bis an das Heck des Erntefahrzeugs bzw. an die dortigen Aufwärtsförderer 10'. Durch die große Förderbreite der Siebbänder 11 und 12 ist ein schonendes, insbesondere auch druckfreies Fördern der gerodeten Kartoffeln 6 gewährleistet und dabei Beschädigungen der geernteten Kartofffeln vermieden.

Eine Besonderheit der Erntemaschine 1 besteht auch darin, daß mit Hilfe einer nachstehend noch näher beschriebenen Gelenk- und Steuereinheit, die in den Figuren allgemein mit 17 bezeichnet ist, der Vorderrahmen 2' und der Hinterrahmen 2" gelenkig und steuerbar derart miteinander verbunden sind, daß einerseits ein Schwenken des Hinterrahmens 2" um seine Längsachse relativ zum Vorderrahmen 2' möglich ist, und zwar insbesondere auch in der Weise, daß beim Roden der Hinterrahmen 2" bzw. der dortige Teil der Erntemaschine 1' so gesteuert um die Längsachse des Hinterrahmens 2" geschwenkt werden kann, daß die Fahrzeugequerachse des Hinterrahmens 2" horizontal oder zumindest annähernd horizontal ausgerichtet ist, und zwar auch beim Ernten oder beim Roden in einem abschüssigen Gelände quer zum Hang (Seitenniveauausgleich). Hierdurch wird ein gleichmäßig verteilter Erntegutfluß auf der gesamten Breite der Siebbänder 12 erreicht, da diese quer zu ihrer Förderrichtung (entgegen dem Pfeil A) horizontal oder zumindest annähernd horizontal ausgerichtet sind.

Mit der Gelenk- und Steuereinrichtung 17 ist weiterhin ein Knicken des Fahrzeugrahmens 2 am Übergang zwischen dem Vorderrahmen 2' und dem Hinterrahmen 2" insbesondere auch um eine aufrechte Achse möglich (Knickbewegung), um so unter Mitwirkung der Lenkung der vorderen Achse und der Hinterachse 13 ein spurversetztes Fahren der Erntemaschine 1 während des Erntens bzw. Rodens in der Weise zu ermöglichen, daß die Hinterachse 13 einen im Vergleich zur Vorderachse 7 größeren seitlichen Abstand von dem noch nicht abgeernteten Bereich eines Feldes aufweist.

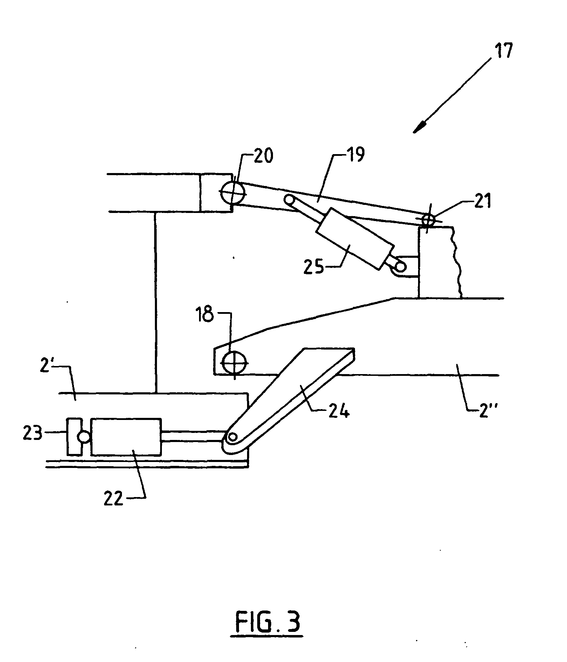

Wie die Figur 3 zeigt, umfaßt die Gelenk- und Steuereinrichtung 17 unter anderem ein erstes Gelenk 18, welches als Kugelgelenk oder als Gelenk mit den Eigenschaften eines Kugelgelenks ausgebildet ist und welches das rückwärtige Ende des Vorderrahmens 2' mit dem vorderen Ende des Hinterrahmens 2" verbindet. Weiterhin umfaßt die Gelenk- und Steuereinrichtung 17 einen starren Lenker 19, der mit einem Ende oberhalb des Gelenks 18 mittels eines Gelenkes 20 mit dem Vorderrahmen 2' und mit seinem anderen Ende mittels eines Gelenks 21 mit dem Hinterrahmen 2" gelenkig verbunden ist.

Die Gelenke 20 und 21, die sich beide in vertikaler Richtung oberhalb des Gelenks 18 befinden, erlauben ein Schwenken des Lenkers 19 um erste Achsen, die radial zur Längserstreckung des Lenkers 19 verlaufen und jeweils in der vertikalen Mittelebene M des Vorderrahmens 2' bzw. in der vertikalen Mittelebene M' des Hinterrahmens 2" liegen, sowie zugleich auch ein gewisses Schwenken um zweite Achsen senkrecht zur ersten Gelenkachse.

Wie die Figur 3 zeigt, bilden die Gelenkpunkte 18, 20 und 21 ein Gelenkdreieck, bei dem die Gelenkpunkte 18 und 20 so angeordnet sind, daß die erste Gelenkachse des Gelenks 20 das Gelenk 18 schneidet und sich beide Gelenke 20 und 21 in vertikaler Richtung oberhalb des Gelenks 18 befinden.

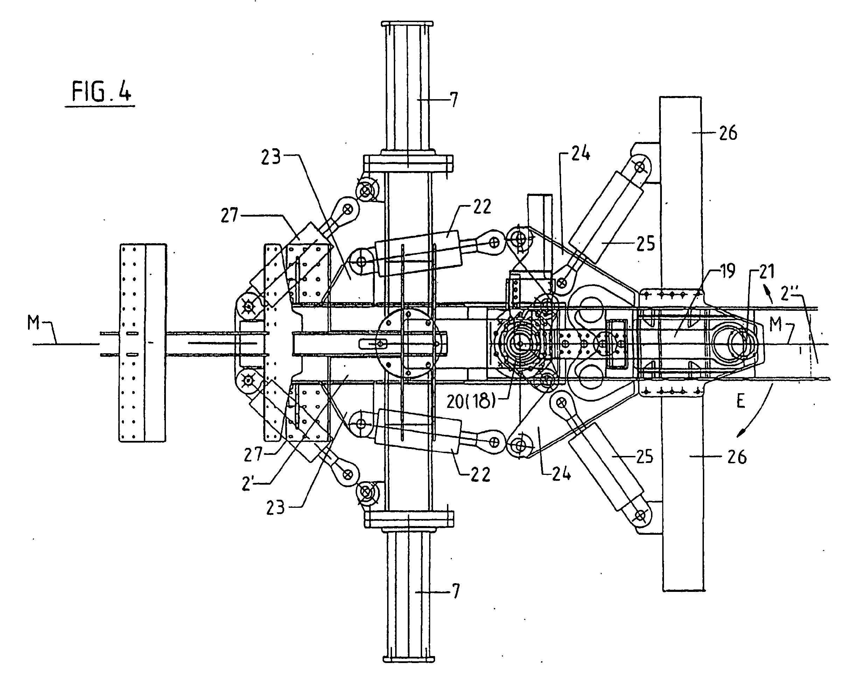

Bestandteil der Gelenk- und Steuereinrichtung 17 sind weiterhin mehrere Steuer- oder Stellglieder, die bei der dargestellten Ausführungsform von Hydraulik-Zylindern gebildet sind. Letztere sind für jede Funktion jeweils paarweise beidseitig von der vertikalen Mittelebene M bzw. M' vorgesehen, und zwar u.a. die Hydraulikzylinder 22, die zwischen Lagerelementen 23 des Vorderrahmens 2' und Lagerelementen 24 des Hinterrahmens 2" wirken, die (Lagerelemente) jeweils senkrecht zur Mittelebene M bzw. M' vom Vorderrahmen 2' bzw. Hinterrahmen 2" radial wegstehen. Mit den Hydraulik-Zylindern 22 ist die Knickbewegung oder -Steuerung derart möglich, daß der Hinterrahmen 2" aus einer Ausgangsstellung, in der dieser Rahmen achsgleich mit dem Vorderrahmen 2' angeordnet ist, zur einen oder anderen Seite hin verschwenkt wird, wie dies in der Figur 4 mit dem Doppelpfeil E angedeutet ist.

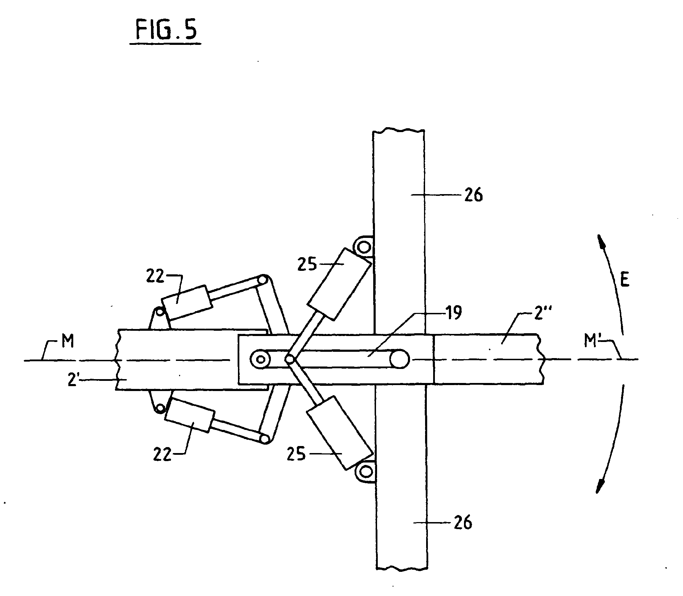

Bestandteil der Gelenk- und Steuereinrichtung 17 sind weiterhin die beiden Hydraulik-Zylinder 25, die entsprechend den Figuren 3 und 5 jeweils zwischen dem Lenker 19 und einem Arm 26 wirken, der radial über die Mittelebene M' des Hinterrahmens 2" wegsteht. Die beiden Arme 26 bilden einen Teil des Hinterrahmens 2", auf dem dann u. a. auch der Bunker 10 vorgesehen ist. Die Anordnung ist bei der dargestellten Ausführung so getroffen, daß die Anlenkpunkte der Hydraulik-Zylinder 25 an dem jeweiligen Arm 26 von der Mittelebene M' im gleichen Abstand beabstandet sind, wobei weiterhin die Anlenkpunkte der Hydraulik-Zylinder 25 an den Armen 26 in Seitenansicht des Fahrzeugrahmens 2 tiefer liegen als die entsprechenden Anlenkpunkte am Lenker 19 und auch tiefer liegen als das Gelenk 21. Ebenso wie das Gelenk 18 sind auch das Gelenk 20 in der Mittelebene M und das Gelenk 21 in der Mittelebene M' vorgesehen.

Durch die Hydraulik-Zylinder 25 bzw. durch die gegenläufige Betätigung dieser Zylinder ist (gegebenenfalls Unterstützung der Zylinder 16) ein Kippen des Hinterrahmens 2*"* um seine Längsachse, d. h. die Seitenniveaueinstellung des Hinterrahmens 2" möglich.

Die Figur 4 zeigt zwei weitere Hydraulik-Zylinder 27. Diese bilden die Lenkzylinder für das Lenken der Vorderachse 7 und wirken daher zwischen dieser Vorderachse und dem Vorderrahmen 2'. Durch die beschriebene Verteilung der Massen am Vorderrahmen 2' und am Hinterrahmen 2" wird der oberhalb des Gelenkes 18 angeordnete Lenker 19 zumindest bei leerem Bunker 10 im wesentlichen nur auf Zug beansprucht. Lediglich bei gefülltem Bunker 10 treten im Lenker 19 auch nennenswerte Druckkräfte auf.

Die wesentlichen Vorteile der Erntemaschine 1 bestehen darin, daß bei einfacher und insbesondere auch gewichtsparender Konstruktion ein gesteuertes Knicken des Fahrzeugrahmens 2 sowie eine gesteuerte Niveauregelung für den Hinterrahmen 2" möglich sind, wobei die Abstützung des Hinterrahmens 2" insbesondere auch bei dieser Niveauregelung durch den Vorderrahmen 2' bzw. über die dortigen Raupen- oder Gummiraupenbandlaufwerke 8 erfolgt, die eine große Auflagefläche bilden. In jeder Knick- und Seitenniveaueinstellung ist über die Zylinder 22 und 25 eine starre Verbindung zwischen dem Vorderrahmen 2' und dem Hinterrahmen 2" gewährleistet.

Die Seitenniveauregelung hat den Vorteil einer gleichmäßigen Verteilung des Erntegutstromes auf die gesamte Breite der Siebbänder 12 und damit den Vorteil einer drucklosen und schonenenden Förderung des Erntegutes bzw. der Kartoffeln 6.

Im Bereich des vorderen Siebbandes 11 ist nach der der Erfindung zugrundeliegenden Erkenntnis eine Seitenniveauregelung nicht erforderlich, da mit dem dortigen Erntegutstrom noch große Mengen an Erdreich mitgeführt werden, welches selbst bei schrägstehendem Vorderrahmen 2' ein seitliches Verrollen der geernteten Kartoffeln 6 auf dem Siebband 11 verhindert.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird. So ist es beispielsweise möglich, daß die Siebbänder 11 und/oder 12 jeweils aus mehreren Einzel-Siebbändern bestehen, die quer und/oder in Förderrichtung aneinander anschließen. Weiterhin ist es selbstverständlich auch möglich, anstelle der Hydraulik-Zylinder 16, 22, 25, 27 andere Stellglieder vorzusehen und/oder anstelle der paarweisen Anordnung der Hydraulik-Zylinder 22, 25, 27 oder Stellglieder zumindest für eine Funktion nur ein oder aber mehr als zwei Stellglieder zu verwenden.

Vorstehend wurde davon ausgegangen, daß die Anlenkpunkte der Hydraulik-Zylinder 25 an den Armen 26 in Seitenansicht des Fahrzeugrahmens 2 tiefer liegen als die entsprechenden Anlenkpunkte am Lenker 19 und auch tiefer liegen als das Gelenk 21. Selbstverständlich sind hier auch andere Anordnungen dieser Anlenkpunkte möglich, beispielsweise so, daß die Anlenkpunkte der Hydraulik-Zylinder 25 an den Armen 26 in Seitenansicht des Fahrzeugrahmens 2 höher liegen als die entsprechenden Anlenkpunkte am Lenker 19 und auch höher als das Gelenk 21, womit verbesserte Kräfteverhältnisse erreicht werden.

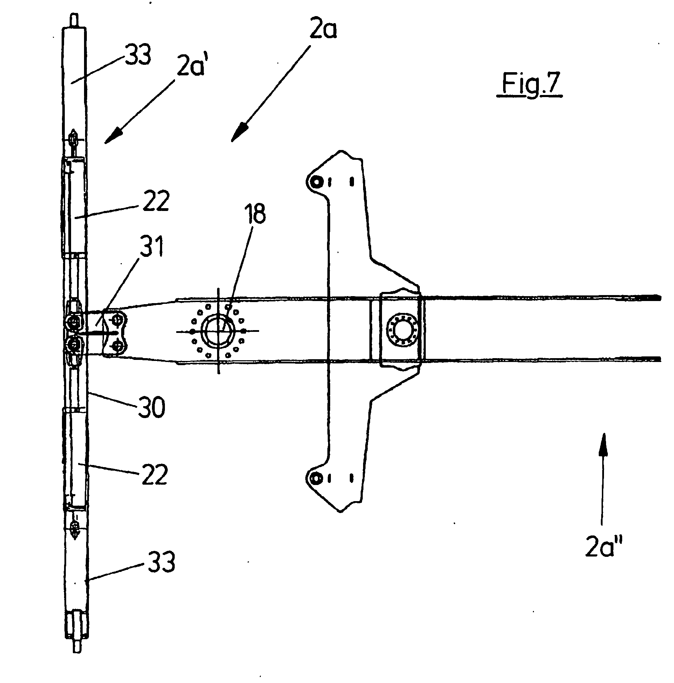

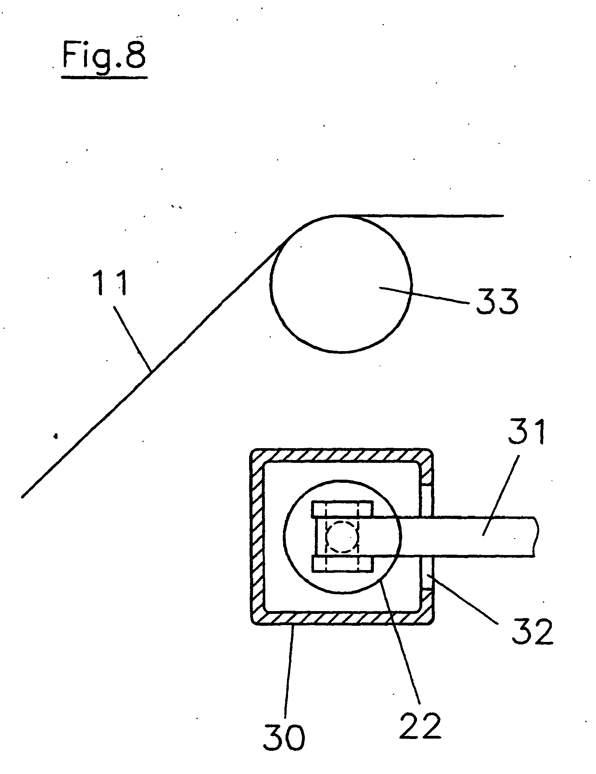

Die Figuren 7 und 8 zeigen in Teildarstellung den Fahrzeugrahmen 2a einer weiteren möglichen Ausführungsform der Erfindung. Der Fahrzeugrahmen 2a unterscheidet sich im wesentlichen dadurch, daß die beiden Hydraulikzylinder 22, die für die Knickverstellung vorgesehen sind, in einem am Vorderrahmen 2a' vorgesehenen Querrohr 30 aus Stahl und mit einem bei der dargestellten Ausführungsform quadratischen Querschnitt untergebracht sind. Der Hinterrahmen 2a" ist an seiner dem Vorderrahmen 2a' zugewandten Seite mit einer Verlängerung 31 versehen, die durch eine Öffnung 32 in das Querrohr 30 hineinreicht. Die Öffnung 32 ist in der Mitte des Querrohres 30 an der dem Hinterrahmen 2a" zugewandten und in einer vertikalen Ebene liegenden Seite des Querrohres 30 gebildet. Die vollständig abgedeckt im Inneren des Querrohres 30 angeordneten Hydraulikzylinder 22 wirken jeweils zwischen einem Ende dieses Querrohres 30 und der Verlängerung 31.

Oberhalb des Querrohres 30 befindet sich eine Umlenkwalze 33, über die das Siebband 11 geführt ist. Wie oben erläutert, dient das Siebband 11 zum Fördern der mit dem Ernte- oder Rodeaggregat gerodeten Hackfrüchte an die nachfolgenden Siebbänder 12 des Hinterrahmens 2a". Durch die Unterbringung der Zylinder 22 in dem Querrohr 30 sind diese gegen die von dem Siebband 11 herabfallende Erde geschützt. Durch die Anordnung des Querrohres 30 unterhalb der Trag- oder Umlenkwalze 33, deren Durchmesser bei der dargestellten Ausführungsform gleich oder in etwa gleich dem Außenquerschnitt des Querrohres 30 ist, wird auch eine Anlagerung von Erde auf dem Querrohr 30 verhindert.

### Bezugszeichenliste

- 1: Erntemaschine
- 2, 2a: Fahrzeugrahmen
- 2', 2a': Vorderrahmen
- 2", 2a": Hinterrahmen
- 3: Fahrerkabine
- 4: Motor
- 5: Ernte- oder Rodeaggregat
- 6: Kartoffel
- 7: Vorderachse
- 8: Raupen- oder Gummiraupenbandlaufwerk
- 9: Untergrund
- 10: Bunker
- 10': Aufwärtsförderer
- 11, 12: Siebband
- 13: Hinterachse
- 14: Hinterräder
- 15: Pendelgelenk
- 16: Hydraulikzylinder
- 17: Gelenk- und Steuereinrichtung
- 18: Gelenk
- 19: Lenker
- 20, 21: Gelenk
- 22: Hydraulikzylinder
- 23, 24: Lagerelement
- 25: Hydraulik-Zylinder
- 26: Arm
- 27: Hydraulik-Zylinder
- 30: Querrohr
- 31: vordere Verlängerung des Hinterrahmens
- 32: Öffnung
- 33: Trag- oder Umlenkwalze für Siebband 11

- A, B, C, D, E: Pfeil
- M, M': Mittelebene

## Patentansprüche

1. Selbstfahrende Erntemaschine zum Ernten bzw. Roden von Hackfrüchten, insbesondere Kartoffeln, mit einem von einem Vorderrahmen (2') und einem Hinterrahmen (2") gebildeten Fahrzeugrahmen (2), mit wenigstens einem am Vorderrahmen (2') vorgesehenen Fahrwerk (7, 8) sowie mit wenigstens einem am Hinterrahmen (2*"*) vorgesehenen Fahrwerk (13, 14), mit einer an der Vorderseite des Fahrzeugrahmens (2) vorgesehenen Rodeeinrichtung (5) zum mehrreihigen Ernten bzw. Roden der Hackfrüchte, wobei wenigstens ein Fahrwerk (7, 8; 13, 14) lenkbar und/oder durch einen Antrieb (4) am Fahrzeugrahmen (2) angetrieben ist, mit einem am Hinterrahmen (2') vorgesehenen Bunker (10) zur Aufnahme der gerodeten Hackfrüchte (6), mit einer Förderstrecke (11, 12, 10') zum Fördern der gerodeten Hackfrüchte (9) vom Rodeaggregat (5) in den Bunker (10), wobei die Förderstrecke teilweise am Vorderrahmen (2') und in Förderrichtung anschließend teilweise am Hinterrahmen (2") ausgebildet ist und zumindest auf einer Teillänge von wenigstens einem Siebband (11, 12) gebildet ist, und wobei der Vorderrahmen (2') und der Hinterrahmen (2") über eine Gelenkanordnung (17) gelenkig miteinander verbunden sind, und zwar für eine Knick- bzw. Schwenkbewegung um eine Hochachse sowie für eine Schwenkbewegung (C) um eine Längsachse des Hinterrahmens (2") für einen Seitenniveauausgleich, wobei die Gelenkanordnung von einem ersten Gelenk (18) zwischen Vorderrahmen (2') und Hinterrahmen (2") sowie von wenigstens einem Lenker (19) gebildet ist, der mittels eines zweiten Gelenks (20) am Vorderrahmen (2') und mittels eines dritten Gelenks (21) am Hinterrahmen (2") angelenkt ist, wobei die Gelenke (18, 20; 21) räumlich versetzt sind, und wobei die Gelenkeinrichtung (17) weiterhin wenigstens ein erstes zwischen dem Vorderrahmen (2') und dem Hinterrahmen (2") wirkendes Stellglied (22) für die Knickverstellung aufweist, **dadurch gekennzeichnet,**
**daß** das erste Gelenk ein Kugelgelenk (18) ist,
**daß** die Gelenke (18 20; 21) räumlich derart versetzt sind, daß sie die Eckpunkte eines Dreiecks bilden,
**daß** die Gelenkeinrichtung (17) für die Seitenniveaurelgelung (C) weiterhin wenigstens ein zweites Stellglied (25) aufweist, und
**daß** das wenigstens eine zweite Stellglied (25) zwischen dem wenigstens einen Lenker (19) und dem Hinterrahmen (2") wirkt.

2. Erntemaschine nach Anspruch 1, **dadurch gekennzeichnet, daß** das erste Stellglied (22) und/oder das zweite Stellglied (25) jeweils paarweise beidseitig vom Vorderrahmen (2') und/oder Hinterrahmen (2") vorgesehen sind.

3. Erntemaschine nach Anspruch 1 oder 2, **dadurch gekennzeichnet, daß** das wenigstens eine erste Stellglied (22) zwischen einem am Vorderrahmen (2') vorgesehenen ersten Lagerelement (23) und einem am Hinterrahmen (2*"*) vorgesehenen zweiten Lagerelement (24) wirkt.

4. Erntemaschine nach einem der vorhergehenden Ansprüche, **dadurch gekennzeichnet, daß** das wenigstens eine zweite Stellglied (25) an einem Arm oder Lagerelement (26) des Hinterrahmens (2") angreift.

5. Erntemaschine nach einem der Ansprüche (1-4), **dadurch gekennzeichnet, daß** die Lagerelemente (23, 24, 26) seitlich über eine Mittelebene (M, M*'*) des Vorderrahmens (2') bzw. des Hinterrahmens (2") wegstehen, wobei die jeweilige Mittelebene (M, M') die Hochachse sowie die Längsachse des Vorderrahmens (2') bzw. des Hinterrahmens (2") einschließt.

6. Erntemaschine nach einem der vorhergehenden Ansprüche, **dadurch gekennzeichnet, daß** das wenigstens eine zweite Stellglied (25) mit einem Ende arm Hinterrahmen (2*"*) an einem Punkt angreift, der unterhalb des dritten Gelenks (21) liegt.

7. Erntemaschine nach einem der vorhergehenden Ansprüche, **dadurch gekennzeichnet, daß** das wenigstens eine zweite Stellglied (25) mit einem Ende am Hinterrahmen (2") an einem Punkt angreift, der oberhalb des dritten Gelenks (21) liegt.

8. Erntemaschine nach einem der vorhergehenden Ansprüche, **dadurch gekennzeichnet, daß** die Längserstreckung des zweiten Stellgliedes (25) bzw. die Verbindungslinie der Angriffspunkte des zweiten Stellgliedes (25) mit der Längserstreckung des wenigstens einen Lenkers (19) einen Winkel einschließen.

9. Erntemaschine nach einem der vorhergehenden Ansprüche, **dadurch gekennzeichnet, daß** die von der Längserstreckung des zweiten Stellgliedes (25) und der Längsachse des Lenkers (19) definierte Ebene mit einer Mittelebene M' des Hinterrahmens (2") einen von 90° abweichenden Winkel einschließt.

10. Erntemaschine nach einem der vorhergehenden Ansprüche, **dadurch gekennzeichnet, daß** das erste Gelenk (18) und das zweite Gelenk (20) achsgleich oder in etwa achsgleich angeordnet sind.

11. Erntemaschine nach einem der vorhergehenden Ansprüche, **dadurch gekennzeichnet, daß** das vordere Fahrwerk von zwei Raupen- oder Gummiraupenbandlaufwerken (8) gebildet ist, von denen jeweils eines an einer Längsseite der Erntemaschine (1) vorgesehen ist;

12. Erntemaschine nach einem der vorhergehenden Ansprüche, **dadurch gekennzeichnet, daß** das am Hinterrahmen (2") vorgesehene Fahrwerk (13, 14) eine Pendelachse (13) aufweist.

13. Erntemaschine nach einem der vorhergehenden Ansprüche, **dadurch gekennzeichnet, daß** der wenigstens eine Lenker (19) mit Abstand oberhalb des ersten Gelenks (18) vorgesehen ist.

14. Erntemachine nach einem der vorhergehenden Ansprüche, **dadurch gekennzeichnet, daß** die Masseverteilung am Vorderrahmen (2') derart gewählt ist, daß der Massenschwerpunkt vor der Achse (7) des vorderen Fahrwerks (7, 8) liegt

15. Erntemaschine nach einem der vorhergehenden Ansprüche, **dadurch gekennzeichnet, daß** die Masseverteilung am Hinterrahmen (2") derart gewählt ist, daß zumindest bei leerem Bunker (10) der Massenschwerpunkt hinter der Achse (13) des rückwärtigen fahrwerks (13, 14) liegt

16. Erntemaschine nach einem der vorhergehenden Ansprüche, **dadurch gekennzeichnet, daß** die Stellglieder (16, 22, 25) zumindest teilweise Hydraulik-Zylinder sind.

## Claims

1. Self-propelled harvester for harvesting or lifting root crops more particularly potatoes, with a vehicle frame (2) formed by a front frame (2') and a rear frame (2"), with at least one chassis (7, 8) provided on the front frame (2') as well as with at least one chassis (13, 14) provided on the rear frame (2"), with a lifting device (5) provided on the front side of the vehicle frame (2) for multi-row harvesting or lifting of the root crops, wherein at least one chassis (7, 8;13,14) can be steered and/or driven through a drive (4) on the vehicle frame (2), with a hopper (10) provided on the rear frame (2') for receiving the lifted root crops (6), with a conveyor section (11, 12, 10') for delivering the lifted root crops (9) from the lifting unit (5) into the hopper (10) wherein the conveyor section is formed in part on the front frame (2') and following on same in the conveyor direction in part on the rear frame (2") and is formed at least over part of the length by at least an open web elevator belt (11, 12), and wherein the front frame (2') and the rear frame (2") are connected to one another for articulated movement through an articulation assembly (17), namely for bending and swivel movement about a vertical axis as well as for swivel movement (C) about a longitudinal axis of the rear frame (2*"*) for lateral levelling wherein the articulation assembly is formed by a first articulated joint (18) between the front frame (2') and rear frame (2") as well as by at least one guide rod (19) which is attached to the front frame (2') by means of a second articulated joint (20) and to the rear frame (2") by means of a third articulated joint (21) wherein the joints (18; 20; 21) are spatially off-set from one another, and wherein the articulation assembly (17) furthermore has at least a first positioning member (22) acting between the front frame (2') and the rear frame (2") for adjusting the bending angle,
**characterised in that** the first articulated joint is a ball joint (18), that the joints (18; 20; 21) are spatially off-set so that they form the corner points of a triangle, that the articulation assembly (17) furthermore has at least a second positioning member (25) for the regulating lateral levelling(C), and that the at least second positioning member (25) acts between the at least one guide rod (19) and the rear frame (2").

2. Harvester according to claim 1 **characterised in that** the first positioning member (22) and/or the second positioning member (25) are each provided in pairs on either side of the front frame (2') and/or rear frame (2").

3. Harvester according to claim 1 or 2 **characterised in that** the at least one first positioning member (22) acts between a first bearing element (23) provided on the front frame (2') and a second bearing element (24) provided on the rear frame (2").

4. Harvester according to one of the preceding claims **characterised in that** the at least one second positioning member (25) engages on an arm or bearing element (26) of the rear frame (2").

5. Harvester according to one of claims 1 - 4 **characterised in that** the bearing elements (23, 24, 26) protrude sideways beyond a centre plane (M, M') of the front frame (2') and rear frame (2") respectively wherein the relevant centre plane (M, M') includes the vertical axis as well as the longitudinal axis of the front frame (2') and rear frame (2") respectively.

6. Harvester according to one of the preceding claims **characterised in that** the at least one second positioning member (25) engages by one end on the rear frame (2") at a point which is below the third articulated joint (21).

7. Harvester according to one of the preceding claims **characterised in that** the at least one second positioning member (25) engages by one end on the rear frame (2") at a point which is above the third articulated joint (21).

8. Harvester according to one of the preceding claims **characterised in that** the longitudinal extension of the second positioning member (25) and the connecting line of the engagement points of the second positioning member (25) include an angle with the longitudinal extension of the at least one guide rod (19).

9. Harvester according to one of the preceding claims **characterised in that** the plane defined by the longitudinal extension of the second positioning member (25) and the longitudinal axis of the guide rod (19) includes with the centre plane M' of the rear frame (2") an angle which is different from 90°.

10. Harvester according to one of the preceding claims **characterised in that** the first articulated joint (18) and the second articulated joint (20) are mounted coaxial or substantially co-axial.

11. Harvester according to one of the preceding claims **characterised in that** the front chassis is formed by two caterpillar or rubber caterpillar tracks (8) of which each one is provided on a longitudinal side of the harvester (1).

12. Harvester according to one of the preceding claims **characterised in that** the chassis (13, 14) provided on the rear frame (2") has a pendulum axis (13).

13. Harvester according to one of the preceding claims **characterised in that** the at least one guide rod (19) is provided at a distance above the first articulated joint (18).

14. Harvester according to one of the preceding claims **characterised in that** the mass distribution on the front frame (2') is selected so that centre of gravity is in front of the axis (7) of the front chassis. (7, 8).

15. Harvester according to one of the preceding claims **characterised in that** the mass distribution on the rear frame (2") is selected so that at least when the hopper (10) is empty the centre of gravity lies behind the axis (13) of the rear chassis (13, 14).

16. Harvester according to one of the preceding claims **characterised in that** the positioning members (16, 22, 25) are at least in part hydraulic cylinders.

## Revendications

1. Récolteuse autopropulsée pour récolter ou encore arracher des tubercules, en particulier des pommes de terre, avec un châssis de véhicule (2) formé par un châssis avant (2') et un châssis arrière (2"), avec au moins un mécanisme de roulement (7, 8) prévu sur le châssis avant (2') ainsi qu'avec au moins un mécanisme de roulement (13, 14) prévu sur le châssis arrière (2"), avec un dispositif d'arrachage (5) prévu sur le côté avant du châssis de véhicule (2) pour récolter ou encore arracher les tubercules sur plusieurs rangées, au moins un mécanisme de roulement (7, 8 ; 13, 14) pouvant être dirigé et / ou étant entraîné par un entraînement (4) sur le châssis de véhicule (2), avec une trémie (10) prévue sur le châssis arrière (2') pour recevoir les tubercules (6) arrachés, avec un tronçon de transport (11, 12, 10') pour transporter les tubercules (9) arrachés de l'ensemble d'arrachage (5) dans la trémie (10), le tronçon de transport étant formé en partie sur le châssis avant (2') et ensuite dans le sens de transport en partie sur le châssis arrière (2") et étant formé au moins sur une longueur partielle par au moins une bande cribleuse (11, 12) et le châssis avant (2') et le châssis arrière (2") étant reliés l'un à l'autre de manière articulée par un dispositif d'articulation (17) et en fait pour un mouvement angulaire ou encore pivotant autour d'un axe vertical ainsi que pour un mouvement pivotant (C) autour d'un axe longitudinal du châssis arrière (2") pour une compensation de niveau latéral, le dispositif d'articulation étant formé d'une première articulation (18) entre le châssis avant (2') et le châssis arrière (2") ainsi que d'au moins un bras oscillant (19) qui est articulé au châssis avant (2') au moyen d'une deuxième articulation (20) et au châssis arrière (2") au moyen d'une troisième articulation (21), les articulations (18, 20 ; 21) étant décalées dans l'espace, et le dispositif d'articulation (17) présentant en outre au moins un premier organe de réglage (22) pour le réglage angulaire, qui agit entre le châssis avant (2') et le châssis arrière (2"), **caractérisée**
**en ce que** la première articulation est une articulation sphérique (18)
**en ce que** les articulations (18, 20 ; 21) sont décalées dans l'espace de telle manière qu'elle forme les sommets d'un triangle,
**en ce que** le dispositif d'articulation (17) présente en outre au moins un deuxième organe de réglage (25) pour le réglage de niveau latéral, et
**en ce que** ledit au moins un deuxième organe de réglage (25) agit entre ledit au moins un bras oscillant (19) et le châssis arrière (2").

2. Récolteuse selon la revendication 1, **caractérisée en ce que** le premier organe de réglage (22) et / ou le deuxième organe de réglage (25) sont respectivement prévus par paire des deux côtés du châssis avant (2') et / ou du châssis arrière (2").

3. Récolteuse selon la revendication 1 ou 2, **caractérisée en ce que** ledit au moins un premier organe de réglage (22) agit entre un premier élément de support (23) prévu sur le châssis avant (2') et un deuxième élément de support (24) prévu sur le châssis arrière (2").

4. Récolteuse selon l'une quelconque des revendications précédentes, **caractérisée en ce que** ledit au moins un deuxième organe de réglage (25) s'applique sur un bras ou un élément de support (26) du châssis arrière (2").

5. Récolteuse selon l'une quelconque des revendications 1 à 4, **caractérisée en ce que** les éléments de support (23, 24, 26) dépassent du plan médian (M, M') du châssis avant (2') ou encore du châssis arrière (2"), le plan médian (M, M') en question enfermant l'axe vertical ainsi que l'axe longitudinal du châssis avant (2').

6. Récolteuse selon l'une quelconque des revendications précédentes, **caractérisée en ce que** ledit au moins un deuxième organe de réglage (25) s'applique avec une extrémité sur le châssis arrière (2") en un point qui se trouve en dessous de la troisième articulation (21).

7. Récolteuse selon l'une quelconque des revendications précédentes, **caractérisée en ce que** ledit au moins un deuxième organe de réglage (25) s'applique avec une extrémité sur le châssis arrière (2") en un point qui se trouve au-dessus de la troisième articulation (21).

8. Récolteuse selon l'une quelconque des revendications précédentes, **caractérisée en ce que** l'étendue longitudinale du deuxième organe de réglage (25) ou encore la ligne de liaison des points d'application du deuxième organe de réglage (25) forme un angle avec l'étendue longitudinale dudit au moins un bras oscillant (19).

9. Récolteuse selon l'une quelconque des revendications précédentes, **caractérisée en ce que** le plan défini par l'étendue longitudinale du deuxième organe de réglage (25) et l'axe longitudinal du bras oscillant (19) forme un angle différent de 90° avec un plan médian M' du châssis arrière (2").

10. Récolteuse selon l'une quelconque des revendications précédentes, **caractérisée en ce que** la première articulation (18) et la deuxième articulation (20) sont disposés de manière coaxial ou approximativement coaxiale.

11. Récolteuse selon l'une quelconque des revendications précédentes, **caractérisée en ce que** le mécanisme de roulement avant est formé par deux trains de roulement sur chenilles ou sur chenilles en caoutchouc (8) dont un est chaque fois prévu sur un côté longitudinal de la récolteuse (1).

12. Récolteuse selon l'une quelconque des revendications précédentes, **caractérisée en ce que** le mécanisme de roulement (13, 14) prévu sur le châssis arrière (2") présente un essieu oscillant (13).

13. Récolteuse selon l'une quelconque des revendications précédentes, **caractérisée en ce que** ledit au moins un bras oscillant (19) est prévu à distance au-dessus de la première articulation (18).

14. Récolteuse selon l'une quelconque des revendications précédentes, **caractérisée en ce que** la distribution de la masse sur le châssis avant (2') est choisie de telle manière que le point de gravité de la masse se trouve devant l'essieu (7) du mécanisme de roulement avant (7, 8).

15. Récolteuse selon l'une quelconque des revendications précédentes, **caractérisée en ce que** la distribution de la masse sur le châssis arrière (2") est choisie de telle manière que le point de gravité de la masse se trouve derrière l'essieu (13) du mécanisme de roulement arrière (13, 14) au moins quand la trémie (10) est vide.

16. Récolteuse selon l'une quelconque des revendications précédentes, **caractérisée en ce que** les organes de réglage (16, 22, 25) sont au moins en partie des vérins hydrauliques.
